# EUROPÄISCHE PATENTSCHRIFT

(11) **EP 0 945 829 B1**
(45) Veröffentlichungstag und Bekanntmachung des Hinweises auf die Patenterteilung: **27.09.2006**
(21) Anmeldenummer: 99200805.2
(22) Anmeldetag: 16.03.1999
(51) Int. Cl.: G06K 7/00, G06K 19/07

(54) **Anordnung für einen Antennenschwingkreis für kontaktlose Übertragungssysteme**
Arrangement for a resonant circuit coil for contactless communicationsystems
Arrangement pour une bobine de circuit résonnant pour des systèmes de communication sans contact

(30) Priorität: 24.03.1998 DE 19812728
(43) Veröffentlichungstag der Anmeldung: 29.09.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Giesler, Thomas, Dr.-Ing., Röntgenstrasse 24, 22335 Hamburg (DE); Böh, Frank, Röntgenstrasse 24, 22335 Hamburg (DE)
(74) Vertreter: Volmer, Georg

(56) Entgegenhaltungen:
- FR-A- 2 751 148
- US-A- 4 782 308

## Beschreibung

Die Erfindung betrifft eine Anordnung für ein System zur kontaktlosen Übertragung von Daten und/oder Energie zwischen einer Basisstation mit einem Antennenschwingkreis und einem Transponder.

Die Basisstation überträgt Daten und Energie über ein elektromagnetisches Feld zu einem Transponder. Die höchste Übertragungseffektivität wird erreicht, wenn der Antennenschwingkreis mit seiner Resonanzfrequenz auf eine von einem Generator in der Basisstation festgelegte Übertragungsfrequenz abgestimmt ist, auf die auch der Transponderschwingkreis mit seiner Resonanzfrequenz abgestimmt ist.

In der EP 0 625 832 A1 wird ein System zur drahtlosen Daten- und Energieübertragung beschrieben, bei dem der Antennenschwingkreis mit zuschaltbaren Kapazitäten auf eine festgelegte Übertragungsfrequenz automatisch abgestimmt wird.

Aus der FR-A-2 751 148 ist eine kontaktlose Chipkarte bzw. ein elektronisches Etikett bekannt. Diese Chipkarte weist einen Antennenschwingkreis auf, dem in der kontaktlosen Chipkarte eine Anordnung 10 parallelgeschaltet ist, die zwei Anordnungen enthält, um die von der kontaktlosen Chipkarte empfangene Spannung in beiden Halbwellen zu begrenzen. Die Aufgabe der in dieser Druckschrift beschriebenen Anordnungen besteht darin, einen Überspannungsschutz in der kontaktlosen Chipkarte bei zu starker Annäherung der kontaktlosen Chipkarte an das Lesegerät zu gewährleisten. Zu diesem Zweck wird aber die Begrenzung beider Halbwellen mit zwei Anordnungen benötigt, da anderenfalls eine auftretende Überspannung noch in der zweiten, nicht begrenzten Halbwelle wirken und entsprechend negative Folgen auslösen würde.

Um bei der in der FR-A-2 751 148 dargestellten Schaltung trotzdem eine vorhandene Amplitudenmodulation eines auf die Chipkarte übertragenen Datensignals demodulieren zu können, werden zwei Demodulatoren vorgesehen. Demnach weist diese Anordnung einen ersten Demodulator auf, der als ein Kleinsignaldemodulator fungiert und der bei geringen Amplitude der von der kontaktlosen Chipkarte empfangenen Spannung diese Spannung demoduliert, sowie einen zweiten Demodulator, der als ein Großsignaldemodulator fungiert und der bei hohen Amplituden der von der kontaktlosen Chipkarte empfangenen Spannung die durch die der Begrenzung beider Halbwellen dienenden Anordnungen fließenden Begrenzungsströme demoduliert.

Die aus der FR-A-2 751 148 bekannte Anordnung dient somit dazu, in der Chipkarte auf die durch unterschiedliche Abstände (dort: d) zur Basisstation auftretenden Empfangsfeldstärkeschwankungen zu reagieren, wobei die Basisstation keiner näheren Betrachtung unterliegt.

Verstimmungen des Antennenschwingkreises entstehen durch temperaturbedingte Drifterscheinungen an den Schwingkreiselementen oder durch herstellungsbedingte Abweichungen. Dadurch ist die Resonanzfrequenz des Schwingkreises nicht mehr genau auf die Übertragungsfrequenz getrimmt, wodurch der Antennenstrom verringert wird und folglich auch die übertragene Feldstärke sinkt. Durch derartige Verstimmungen ist möglicherweise eine korrekte Daten- und Energieübertragung zum Transponder nicht möglich, oder der erreichbare Abstand zwischen Basisstation und Transponder wird merklich geringer. Um diese Beschränkung des Funktionsumfanges zu umgehen, müssen Komponenten mit niedrigen Toleranzen verwendet werden, oder die Systeme müssen manuell nachgestimmt werden. Es lassen sich auch aufwendige Schaltungen zur automatischen Abstimmung der Übertragungsfrequenz einsetzen. Eine andere Möglichkeit, eine sichere Übertragung zu gewährleisten, ist die Erhöhung der Leistung, mit der das System betrieben wird. Dazu sind jedoch stärkere Antennentreiber notwendig, die, wie bei den anderen genannten Möglichkeiten, die Systemkosten erhöhen.

Wenn die Resonanzfrequenz eines Antennenschwingkreises der Basisstation genau auf die Übertragungsfrequenz abgestimmt ist, besteht die Impedanz des Antennenschwingkreises nur noch aus dem realen ohmschen Widerstand, wodurch der maximale Strom und somit auch die maximale Feldstärke erreicht wird. Der maximal mögliche Strom wird durch die Antennentreiber und die Stromversorgung begrenzt. Für die maximale Feldstärke gelten meist gesetzliche Regelungen. Antennenschwingkreise erreichen die für eine Daten- und Energieübertragung erforderliche Feldstärke in einem Toleranzbereich. Dieser Toleranzbereich kennzeichnet den Bereich, in dem die Resonanzfrequenz von der Übertragungsfrequenz abweichen darf und dabei noch eine sichere Übertragung gewährleistet ist. Er ist ein Maß für die maximal zulässige Abweichung der Resonanzfrequenz des Antennenschwingkreises von der Übertragungsfrequenz. Liegt die Resonanzfrequenz des Schwingkreises außerhalb dieses Toleranzbereiches, ist keine Daten- und Energieübertragung möglich.

Wird der Antennenschwingkreis mit einer größeren Leistung betrieben, steigt der fließende Strom und auch die maximale Feldstärke, wenn der Antennenschwingkreis abgestimmt ist. Der Toleranzbereich der Resonanzfrequenz für die Abweichung von der Übertragungsfrequenz ist bei Antennenschwingkreisen, die mit größerer Leistung betrieben werden, größer, als bei Antennenschwingkreisen, die mit weniger Leistung betrieben werden. Für die größere Leistung sind jedoch stärkere Treiber erforderlich. Neben diesem Mehraufwand wird bei mit großer Leistung betriebenen Antennenschwingkreisen auch ein stärkeres elektromagnetisches Feld erzeugt, wenn der Antennenschwingkreis abgestimmt ist, womit eventuell gegen gesetzliche Bestimmungen verstoßen wird.

Aufgabe der Erfindung ist es deshalb, eine Anordnung anzugeben, die innerhalb eines Toleranzbereichs unabhängig von der Verstimmung der Resonanzfrequenz bzgl. der Übertragungsfrequenz eine weitgehend konstante und ausreichende Feldstärke erzeugt.

Diese Aufgabe wird durch Merkmale des Patentanspruchs 1 gelöst.

Bei einem auf die Übertragungsfrequenz abgestimmten Antennenschwingkreis ist eine sichere Übertragung gewährleistet. Auch wenn ein Antennenschwingkreis nicht genau auf die Übertragungsfrequenz des Systems abgestimmt ist, ist eine Übertragung von Daten und Energie noch möglich. Die Abweichung von dieser genauen Abstimmung der Resonanzfrequenz auf die Übertragungsfrequenz, bei der noch eine Übertragung möglich ist, wird mit dem erwähnten Toleranzbereich gekennzeichnet.

Ein Schwingkreis, der mit mehr Leistung betrieben wird, erreicht bei Resonanz eine hohe Feldstärke. Die Erhöhung der Feldstärke ist aber mit Erreichen der erforderlichen Feldstärke nicht mehr notwendig. Um die Feldstärke nicht weiter steigen zu lassen, wird die Spannung nach Erreichen der erforderlichen Feldstärke begrenzt. Da in diesen Systemen meist eine Amplitudenmodulation verwendet wird, die bei einer Spannungsbegrenzung unterdrückt wird, wird die Spannung nur in einer Halbwelle begrenzt. Diese Begrenzung wird durch die Anordnung erreicht, die einem Element des Antennenschwingkreises parallelgeschaltet wird und die die Spannung in einer Halbwelle begrenzt. Durch diese Begrenzung steigt der Antennenstrom nach Erreichen eines Grenzwertes nicht mehr stark an, so daß auch bei Abweichung der Resonanzfrequenz des Antennenschwingkreises die Feldstärke so groß ist, daß eine sichere Daten- und Energieübertragung möglich ist, aber gesetzliche Bestimmungen nicht überschritten werden. Die Antennentreiber müssen nicht höher dimensioniert werden, da der Antennenstrom bei Erreichen eines Grenzwertes nicht weiter steigt. Die resultierende Feldstärke bleibt über den Bereich der Spannungsbegrenzung, der innerhalb des Toleranzbereiches liegt, konstant. Damit wird unabhängig von der Abweichung der Resonanzfrequenz von der Übertragungsfrequenz in dem Bereich, in dem eine Übertragung von Daten und Energie zum Transponder möglich ist, eine konstante Feldstärke erreicht.

Die erfindungsgemäße Anordnung kann auch als eine Kreisgütenbegrenzung angesehen werden, da mit Begrenzung der Spannung über einem Schwingkreiselement, die Kreisgüte des Schwingkreises zwangsläufig kleiner wird. Die Kreisgüte eines Reihenschwingkreises ist abhängig vom Verhältnis der Spannung über einem Schwingkreiselement zur Generatorspannung bei Resonanz. Beim Parallelschwingkreis ist die Kreisgüte vom Verhältnis des durch ein Schwingkreiselement fließenden Stromes zum zugeführten Strom bei Resonanz abhängig. Hat ein Schwingkreis eine hohe Güte, wird bei geringer Verstimmung die Resonanzüberhöhung geringer, und die resultierende Feldstärke nimmt schnell ab, so daß eine sichere Daten- und Energieübertragung nicht mehr gewährleistet ist. Dieses Verhältnis ändert sich, wenn der Schwingkreis eine geringere Güte hat.

Die erfindungsgemäße Begrenzungsanordnung wird in der beschriebenen Weise in Antennenreihenschwingkreisen eingesetzt. Bei Antennenparallelschwingkreisen wird vorzugsweise eine Begrenzungsanordnung einem Schwingkreiselement in Reihe geschaltet, so daß der durch dieses Schwingkreiselement fließende Strom begrenzt wird.

Ein weiterer Vorteil von Schwingkreisen mit geringer Güte ist die bei Verstimmung auftretende geringere relative Phasendrehung, so daß in einem größeren Bereich eine Belastungsmodulation durchgeführt werden kann. Die häufig verwendete Hüllkurvendemodulation kann ebenso in einem erweiterten Bereich eingesetzt werden, da durch die geringere Güte des Schwingkreises eine Phasendrehung erst bei größeren Verstimmungen auftritt als bei Schwingkreisen mit höherer Güte.

Nachfolgend werden Ausführungsbeispiele anhand der Figuren näher erläutert. Es zeigen:
- Fig. 1: ein Blockschaltbild zur Spannungsbegrenzung,
- Fig. 2: den Signalverlauf bei Spannungsbegrenzung,
- Fig. 3: eine Schaltungsanordnung mit Spannungsbegrenzung parallel zur Spule,
- Fig. 4: eine Schaltungsanordnung mit Spannungsbegrenzung parallel zum Kondensator,
- Fig. 5: eine Schaltungsanordnung zur Spannungsbegrenzung bezogen auf Masse,
- Fig. 6: eine Schaltungsanordnung zur Spannungsbegrenzung aus Feldeffekttransistor, Diode und einem Mikroprozessor.

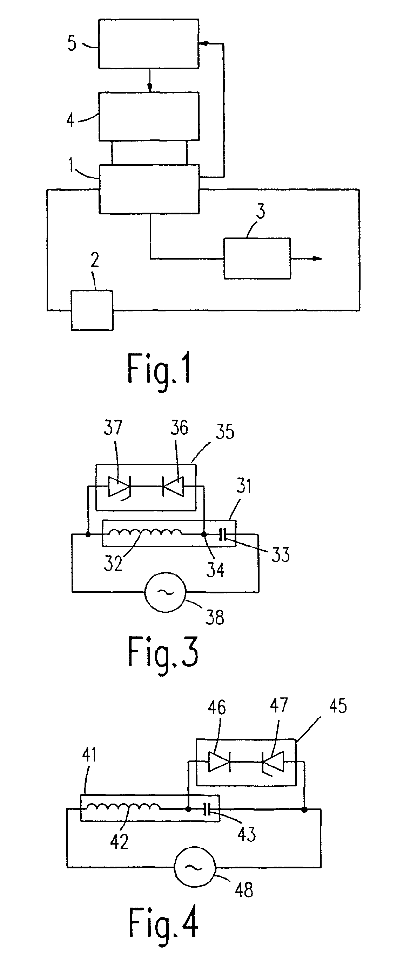

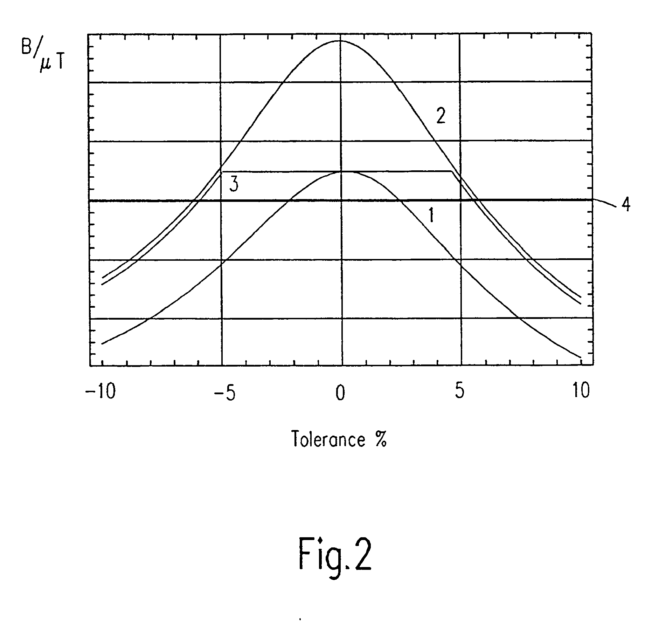

Fig. 1 zeigt schematisch einen Schwingkreis 1, einen Generator 2, einen Demodulator 3, eine steuerbare Begrenzungsanordnung 4, die einem Element dieses Schwingkreises 1 parallelgeschaltet ist, und eine Steuereinheit 5. Der Schwingkreis 1 wird von einem Generator 2 angeregt, und die Begrenzungsanordnung 4 begrenzt die Spannung in einer Halbwelle und reduziert somit auch die Kreisgüte. Diese Begrenzungsanordnung 4 kann dem Schwingkreiskondensator oder der Schwingkreisspule parallel geschaltet werden. Dabei ist bei einem Reihenschwingkreis ein Anschluß der Anordnung mit einem Referenzpunkt zwischen Schwingkreisspule und Schwingkreiskondensator verbunden.

Diese Begrenzungsanordnung 4 kann fest voreingestellte Grenzwerte haben, nach denen die Begrenzung durchgeführt wird. Diese Grenzwerte werden beispielsweise mit Durchbruchspannungen oder Schwellspannungen von Bauelementen festgelegt. Wird die Begrenzungsanordnung von einer Steuereinheit 5 gesteuert, können die Grenzwerte für die Spannungsbegrenzung während des Betriebs verändert werden. Die Spannung am Referenzpunkt am jeweiligen Bauelement geht in die Kreisgüte des Schwingkreises 1 ein, so daß sich nach deren Messung durch das Steuergerät 5 und einer berechneten Änderung der Grenzwerte die Kreisgüte ändert.

Dem Demodulator 3 wird das am Referenzpunkt anliegende, von einem nicht dargestellten Transponder modulierte Signal zugeführt. Der Antennenschwingkreis empfängt beispielsweise Daten von einem nicht dargestellten Transponder, indem der Transponder seinen Schwingkreis entsprechend den zu übertragenden Daten belastet. Diese Daten erscheinen amplitudenmoduliert im Antennenschwingkreis. Das amplitudenmodulierte Signal wird beispielsweise mit einem Spitzenwertgleichrichter demoduliert. Dabei ist darauf zu achten, daß die Demodulation in der Halbwelle möglich ist, die nicht begrenzt ist. Die so übertragenen Daten werden einer Verarbeitungseinheit zugeführt, die nicht dargestellt ist.

Die Begrenzungsanordnung 4 wird über das Schwingkreiselement des Schwingkreises 1 geschaltet, welches die geringste Toleranz hat, da damit die genaueste Begrenzung erreicht wird, d.h. der Antennenstrom oder die Spannung am Schwingkreis sind über die Breite des Toleranzbereiches konstant.

Fig. 2 zeigt die Resonanzüberhöhung von Schwingkreisen mit und ohne Begrenzung. Auf der Ordinate ist die Feldstärke abgetragen. Die Markierung 4 kennzeichnet die für eine sichere Übertragung erforderliche Feldstärke. Auf der Abszisse ist die prozentuale Abweichung der Resonanzfrequenz des Antennenschwingkreises von der Übertragungsfrequenz aufgetragen. Wenn der Antennenschwingkreis mit seiner Resonanzfrequenz auf die Übertragungsfrequenz abgestimmt ist, hat das System eine Toleranz von 0 %. Die Kurve 1 gilt für eine gegebene Ansteuerleistung und für eine Schwingkreisgüte, welche bei einer Toleranz von "2% die erforderliche Feldstärke gerade erreicht. Bei einer höheren Abweichung fällt die Feldstärke unter die durch Markierung 4 gekennzeichnete erforderliche Feldstärke. Kurve 2 zeigt den Feldstärkeverlauf eines Antennenschwingkreises, der mit einer höheren Leistung angesteuert wird. Das Maximum der erreichbaren Feldstärke bei Abstimmung auf die Übertragungsfrequenz des Systems von Kurve 2 liegt deutlich über dem Maximum der Feldstärke von Kurve 1, wodurch der Toleranzbereich, in dem eine Übertragung möglich ist, bei Kurve 2 breiter ist. Der Schwingkreis muß also nicht so genau auf die Übertragungsfrequenz abgestimmt sein, wie der Schwingkreis von Kurve 1, um die erforderliche Feldstärke zu erreichen. Dafür ist bei einem genau auf die Übertragungsfrequenz abgestimmten Schwingkreis die Feldstärke bei dieser Ansteuerleistung so groß, daß sie über einem insbesondere gesetzlich vorgeschriebenen Grenzwert liegen kann. Voraussetzung dafür sind größere Treiber, die einen der großen Feldstärke entsprechenden Strom liefern. Um die große Feldstärke zu verhindern und den Einsatz stärkerer Treiber zu umgehen, wird die Spannung an einem Schwingkreiselement des Schwingkreises begrenzt.

Das Ergebnis der Spannungsbegrenzung ist in dem Signalverlauf der Kurve 3 dargestellt. Da nach Erreichen der erforderlichen Feldstärke keine Erhöhung der Feldstärke mehr notwendig ist, wird die Spannung nach Erreichen diese Grenzwertes begrenzt, wodurch eine konstante ausreichende Feldstärke über den Bereich der Spannungsbegrenzung erreicht wird. Der hohe Antennenstrom, der für ein Erreichen des Maximums notwendig wäre, wird hier nicht benötigt. Der Vorteil dieser Anordnung ist, daß die Systeme nicht mit dem für Kurve 2 benötigtem höheren Strom betrieben werden müssen, durch die Begrenzung aber der größere Toleranzbereich von Kurve 2 gilt.

Aus diesen Gründen können für derartige Systeme Bauelemente mit höheren Abweichungen verwendet werden. Der Aufwand der begrenzenden Anordnung ist sehr gering. Durch diese Anordnung werden die Systemkosten reduziert. Gleichzeitig wird unabhängig von der Abstimmung des Schwingkreises auf die Übertragungsfrequenz innerhalb dieses Bereiches eine konstante Feldstärke erreicht.

Fig. 3 zeigt einen Reihenschwingkreis 31, bestehend aus einer die Antenne bildenden Schwingkreisspule 32 und einem Schwingkreiskondensator 33, der von einem Spannungsgenerator 38 getrieben wird. Die Begrenzungsanordnung 35, bestehend aus einer Zener-Diode 37 und einer entgegengesetzt zur Zener-Diode 37 gepolten Diode 36, ist in diesem Ausführungsbeispiel der Schwingkreisspule 32 parallelgeschaltet. Der Punkt zwischen Schwingkreisspule 32 und Schwingkreiskondensator 33 ist der Referenzpunkt 34. Erreicht die Spannung an der Zener-Diode 37 die Durchbruchspannung, wird die Spannung in einer Halbwelle begrenzt. Die andere Halbwelle wird durch die zur Zener-Diode 37 entgegengesetzt gepolten Diode 36 nicht begrenzt. Dadurch wird über einen Toleranzbereich ein konstanter Antennenstrom erreicht.

Zwischen Transponder und Basisstation, die hier nicht dargestellt sind, werden Daten ausgetauscht. Diese Daten sind auf das Übertragungssignal aufmoduliert. Wenn dieses von der Basisstation empfangene Übertragungssignal in einer Halbwelle begrenzt wird, ist die aufmodulierte Information noch in der anderen Halbwelle enthalten. Das empfangene und begrenzte Übertragungssignal wird einem Demodulator (Fig. 1) zugeführt.

In Fig.4 ist die Begrenzungsanordnung 45, bestehend aus einer Zener-Diode 47 und einer entgegengesetzt zur Zener-Diode 47 gepolten Diode 46, parallel zum Schwingkreiskondensator 43 geschaltet, die die Spannung über dem Kondensator begrenzt.

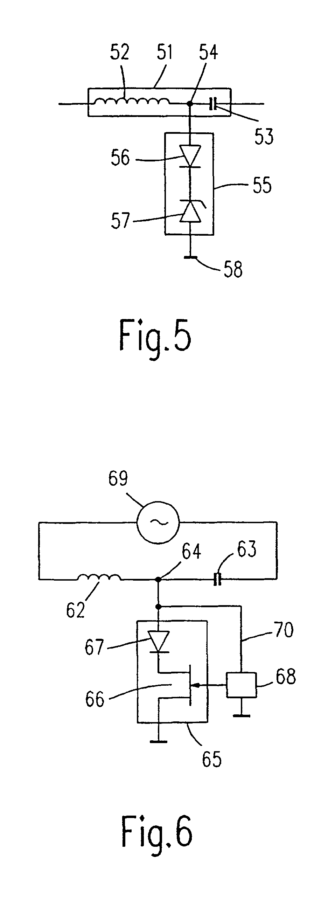

In Fig.5 ist die Begrenzungsanordnung 55 von dem Referenzpunkt 54, der sich zwischen Schwingkreisspule 52 und Schwingkreiskondensator 53 befindet, nach Masse 58 bezogen geschaltet.

Die Schaltungsanordnung in Fig. 6 besteht aus einem Antennenschwingkreis mit Schwingkreisspule 62, Schwingkreiskondensator 63 und dazwischenliegendem Referenzpunkt 64, der vom Generator 69 angetrieben wird, weiterhin aus der Begrenzungsanordnung 65 mit Feldeffekttransistor 66 und Diode 67, wobei der Feldeffekttransistor 66 von einem Mikroprozessor 68 angesteuert wird, um den Grenzwert einzustellen, an dem die Halbwelle begrenzt wird. Der Mikroprozessor 68 mißt die Spannung am Referenzpunkt 64 und errechnet danach den erforderlichen Grenzwert der Spannung für die erforderliche Reduzierung der Kreisgüte mit der Verbreiterung des Toleranzbereichs als Folge.

Ein Antennenparallelschwingkreis, der hier nicht dargestellt ist, wird mit beispielsweise einer Konstantstromquelle, die in Reihe zu einem Schwingkreiselement geschaltet ist, begrenzt.

Es ist prinzipiell auch möglich, eine Begrenzungsanordnung für einen Reihenschwingkreis in Reihe zu den Schwingkreiselementen zu schalten und auch eine Begrenzungsanordnung einem Schwingkreiselement eines Antennenparallelschwingkreises parallel zu schalten. Dabei wird die überschüssige, nicht benötigte Leistung jedoch in der Begrenzungsanordnung verbraucht und die Stromaufnahme der Treiber der Basisstation nicht minimiert.

## Patentansprüche

1. Anordnung für ein System zur kontaktlosen Übertragung von Daten und/oder Energie zwischen einer Basisstation mit einem Antennenschwingkreis und einem Transponder **dadurch gekennzeichnet, daß** eine Schaltung einem Schwingkreiselement des Antennenschwingkreises der Basisstation parallel geschaltet ist, um die Spannung in nur einer Halbwelle des Übertragungssignals bei Überschreiten eines Grenzwertes zu begrenzen, wobei die Spannung der anderen Halbwelle unbegrenzt bleibt.

2. Anordnung nach Anspruch 1,
**dadurch gekennzeichnet,**
**daß** die Anordnung vorzugsweise eine Zener-Diode und eine zur Zener-Diode entgegengesetzt gepolte Diode enthält, wobei die Schaltungsrichtung der Zener-Diode die zu begrenzende Halbwelle festlegt.

3. Anordnung nach Anspruch 1,
**dadurch gekennzeichnet,**
**daß** die Anordnung einen steuerbaren Widerstand und eine Diode enthält, wobei der steuerbare Widerstand ein FET ist, der von einem Mikrocontroller ansteuerbar ist.

4. Anordnung nach Anspruch 1, wobei der Antennenschwingkreis ein Antennenreihenschwingkreis ist,
**dadurch gekennzeichnet,**
**daß** die Anordnung von einem Referenzpunkt zu einem Bezugspotential geschaltet ist und der Referenzpunkt zwischen den Schwingkreiselementen angeordnet ist.

5. Anordnung nach Anspruch 1, wobei der Antennenschwingkreis ein Antennenparallelschwingkreis ist,
**dadurch gekennzeichnet,**
**daß** eine Anordnung zu einem Schwingkreiselement in Reihe geschaltet ist, um den Strom in einer Halbwelle bei Überschreiten eines Grenzwertes zu begrenzen.

6. Lesegerät zur drahtlosen Daten- und Energieübertragung zu einem damit gekoppelten Datenträger, wobei das Lesegerät einen Antennenschwingkreis mit einer Anordnung nach einem der Ansprüche 1 bis 5 enthält.

## Claims

1. An arrangement for a system for contactless transmission of data and/or energy between a base station, including an antenna resonant circuit, and a transponder, **characterized in that** a circuit is connected in parallel to a resonant circuit element of the antenna resonant circuit of the base station in order to limit the voltage in only one half wave of the transmission signal when a limit value is exceeded, whereas the voltage of the other half wave remains unlimited.

2. An arrangement as claimed in claim 1, **characterized in that** the arrangement preferably includes a zener diode and a diode which is connected in the reverse direction relative to the zener diode, the half-wave to be limited being defined by the switching direction of the zener diode.

3. An arrangement as claimed in claim 1, **characterized in that** the arrangement includes a controllable resistor and a diode, the controllable resistor being a FET which can be driven by a microcontroller.

4. An arrangement as claimed in claim 1, in which the antenna resonant circuit is an antenna series resonant circuit, **characterized in that** the arrangement is switched between a reference point and a reference potential, the reference point being situated between the resonant circuit elements.

5. An arrangement as claimed in claim 1, in which the antenna resonant circuit is an antenna parallel resonant circuit, **characterized in that** an arrangement is connected in series with a resonant circuit element in order to limit the current in one half-wave when a limit value is exceeded.

6. A reading apparatus for the contactless transmission of data and energy to a data carrier coupled thereto, the reading apparatus including an antenna resonant circuit with an arrangement as claimed in one of the claims 1 to 5.

## Revendications

1. Arrangement pour un système de transmission sans contact de données et/ou d'énergie, entre une station de base équipée d'un circuit oscillant d'antenne, et un transpondeur,
**caractérisé en ce qu'**un circuit est raccordé en parallèle à un élément de circuit oscillant du circuit oscillant d'antenne de la station de base, afin de limiter la tension sur seulement une demi-onde du signal de transmission, lors du dépassement d'une valeur limite, étant entendu que la tension de l'autre demi-onde ne subit pas de limitation.

2. Arrangement selon la revendication 1,
**caractérisé en ce que** l'arrangement comporte de préférence une diode Zener et une diode de polarité opposée à la diode Zener, dans lequel en outre la direction de conduction de la diode Zener détermine la demi-onde à limiter.

3. Arrangement selon la revendication 1,
**caractérisé en ce que** l'arrangement comporte une résistance variable et une diode, dans lequel en outre la résistance variable est un FET, qui peut être commandé par un microcontrôleur.

4. Arrangement selon la revendication 1, dans lequel le circuit oscillant d'antenne est un circuit d'antenne en série,
**caractérisé en ce que** l'arrangement est raccordé à un circuit d'un point de référence à un potentiel de référence, et **en ce que** le point de référence est disposé entre les éléments de circuits oscillants.

5. Arrangement selon la revendication 1, dans lequel le circuit oscillant est un circuit d'antenne en parallèle,
**caractérisé en ce qu'**un arrangement est raccordé en série à un élément de circuit oscillant, afin de limiter le courant sur une demi-onde, lors du dépassement d'une valeur limite.

6. Appareil de lecture pour la transmission sans fil de données et d'énergie vers un support de données couplé à celui-ci, dans lequel l'appareil de lecture contient un circuit oscillant d'antenne comportant un arrangement selon l'une des revendications 1 à 5.
